(19) Europäisches Patentamt
European Patent Office
Office européen des brevets

(11) **EP 2 395 628 A1**

(12) **EUROPEAN PATENT APPLICATION**
published in accordance with Art. 153(4) EPC

(43) Date of publication:
**14.12.2011 Bulletin 2011/50**

(51) Int Cl.:
*H02J 17/00* (2006.01)  *B60L 5/00* (2006.01)
*B60M 7/00* (2006.01)  *H01M 10/44* (2006.01)
*H02J 7/00* (2006.01)

(21) Application number: **10738651.8**

(22) Date of filing: **08.02.2010**

(86) International application number:
**PCT/JP2010/051823**

(87) International publication number:
**WO 2010/090323 (12.08.2010 Gazette 2010/32)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.02.2009 JP 2009027667**

(71) Applicants:
• **Kabushiki Kaisha Toyota Jidoshokki Kariya-shi, Aichi 448-8671 (JP)**
• **Toyota Jidosha Kabushiki Kaisha Toyota-shi, Aichi 471-8571 (JP)**

(72) Inventors:
• **TAKADA, Kazuyoshi**
  **Kariya-shi**
  **Aichi 448-8671 (JP)**
• **SUZUKI, Sadanori**
  **Kariya-shi**
  **Aichi 448-8671 (JP)**

• **NAKATA, Kenichi**
  **Kariya-shi**
  **Aichi 448-8671 (JP)**
• **SAKODA, Shimpei**
  **Kariya-shi**
  **Aichi 448-8671 (JP)**
• **YAMAMOTO, Yukihiro**
  **Kariya-shi**
  **Aichi 448-8671 (JP)**
• **ICHIKAWA, Shinji**
  **Toyota-shi**
  **Aichi 471-8571 (JP)**
• **ISHIKAWA, Tetsuhiro**
  **Toyota-shi**
  **Aichi 471-8571 (JP)**

(74) Representative: **TBK**
  **Bavariaring 4-6**
  **80336 München (DE)**

(54) **NON-CONTACT POWER TRANSMISSION DEVICE**

(57)    A non-contact power transmission device includes an alternating current power supply, a resonant system, a load, an impedance measuring section and an analyzing section. The resonant system has a primary coil connected to the alternating current power supply, a primary-side resonant coil, a secondary-side resonant coil and a secondary coil. The load is connected to the secondary coil. The impedance measuring section can measure the input impedance of the resonant system. The analyzing section analyzes the measurement results obtained from the impedance measuring section.

**Fig.2**

**Description**

TECHNICAL FIELD

The present invention relates to a non-contact power transmission device.

BACKGROUND ART

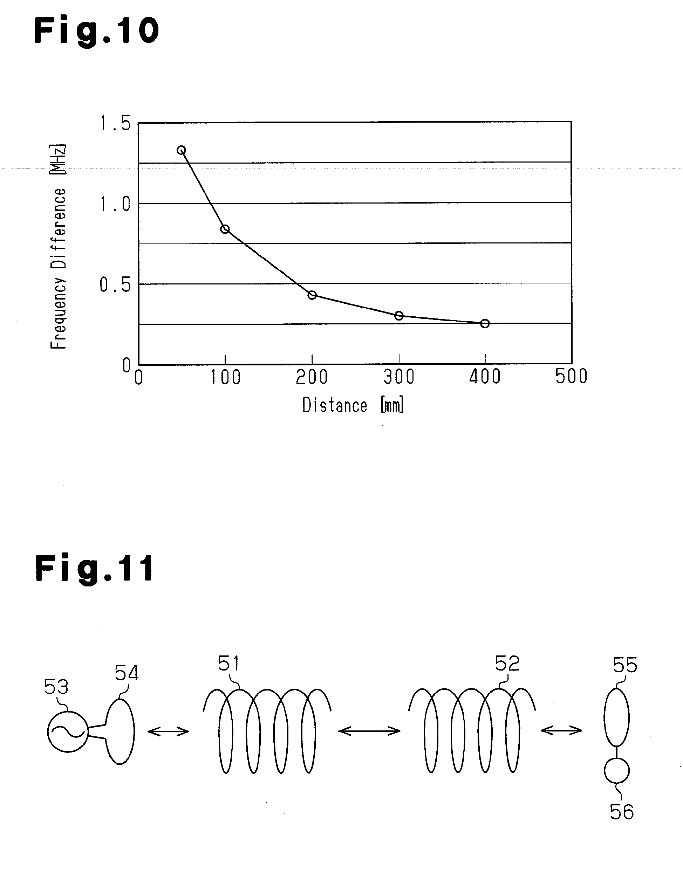

Non-patent document 1 and patent document 1 disclose techniques for transmitting power through resonance. For example, as shown in Fig. 11, two copper coils 51 and 52 (resonant coils) are arranged in a separated state, and one copper coil 51 transmits power to the other copper coil 52 by resonating an electromagnetic field. More specifically, the copper coils 51 and 52 generate a magnetic field that strengthens a magnetic field generated by a primary coil 54, which is connected to an AC power supply 53. A secondary coil 55 uses electromagnetic induction to retrieve the strengthened magnetic field as power from near the copper coil 52. The power is supplied to a load 56. When the copper coils 51 and 52, which have a diameter of 30 cm, are separated from each other by two meters, it has been confirmed that a 60 watt lamp, which serves as the load 56, can be illuminated.
Further, non-patent document 1 and patent document 1 describe the supply of power to a robot.

PRIOR ART DOCUMENTS

NON-PATENT DOCUMENT

Non-Patent Document 1
NIKKEI ELECTRONICS 2007.12.3 PGS. 117-128

PATENT DOCUMENT

Patent Document 1
International Publication No. WO/2007/008646 A2

SUMMARY OF THE INVENTION

PROBLEMS THAT ARE TO BE SOLVED BY THE INVENTION

In this non-contact power transmission device, to efficiently supply the load with the power of the AC power supply, power must be efficiently supplied from the AC power supply to the resonant system. However, non-patent document 1 and patent document 1 only describe non-contact power transmission devices. There is no specific description of how to supply power efficiently.
Further, the input impedance of the resonant system changes in accordance with the distance between the resonant coils and the resistance of the load. Thus, to efficiently perform non-contact power transmission, current must be supplied from the AC power supply 53 to the primary coil 54 at an appropriate frequency that corresponds to the distance between the transmission side (power transmitting) copper coil 51 and the reception side (power receiving) copper coil 52. When the non-contact power transmission device is used with the power transmitting copper coil 51 and the power receiving copper coil 52 fixed at predetermined locations, the distance between the copper coils 51 and 52 should first be measured, and the primary coil 54 should be supplied with current at a frequency that is appropriate for the distance. However, for example, when performing non-contact power transmission to a load that is arranged in a movable body, the power receiving coil 52 must be installed in the movable body in which the load is arranged. In this case, when the movable body stops at a position for receiving power from the power transmitting copper coil 51, the distance between the copper coils 51 and 52 must be measured. When using a sensor dedicated for the measurement of the distance between the copper coils 51 and 52, the sensor increases manufacturing work and enlarges the device. Further, when charging a rechargeable battery that is arranged in the movable body, it is desirable that the state of charge of the rechargeable battery be known. However, when using a sensor dedicated for the measurement of the state of charge, the sensor increases manufacturing work and enlarges the device.
It is an object of the present invention that analyzes the input impedance of the resonant system and performs power transmission under appropriate conditions.

## MEANS FOR SOLVING THE PROBLEMS

To achieve the above object, a non-contact power transmission device according to the present invention includes an AC power supply, a resonant system, a load an impedance measurement unit, and an analysis unit. The resonant system includes a primary coil, which is connected to the AC power supply, a primary resonant coil, a secondary resonant coil, and a secondary coil. The load is connected to the secondary coil. The impedance measurement unit is capable of measuring an input impedance of the resonant system. The analysis unit analyzes a measurement result of the impedance measurement unit.

## BRIEF DESCRIPTION OF THE DRAWINGS

Fig. 1 is a diagram showing the structure of a non-contact power transmission device according to one embodiment of the present invention;
Fig. 2 is a schematic diagram showing the relationship of a charger and a movable body;
Figs. 3(a) to 3(e) are graphs showing the relationship of the input impedance and output voltage of a resonant system relative to the frequency when the distance between resonant coils is fixed and the load resistance is changed;
Figs. 4(a) to 4(e) are graphs showing the relationship of the input impedance and power transmission efficiency of the resonant system relative to the frequency when the distance between resonant coils is fixed and the load resistance is changed;
Fig. 5 is a graph showing the relationship of the maximum output voltage and maximum transmission power efficiency relative to the load resistance;
Fig. 6 is a graph showing the relationship of the input impedance and frequency when the load resistance is changed;
Figs. 7(a) to 7(e) are graphs showing the relationship of the input impedance and power transmission efficiency of the resonant system relative to the frequency when the load resistance is fixed and the distance between resonant coils is changed;
Figs. 8(a) to 8(e) are graphs showing the relationship of the input impedance and output voltage of the resonant system relative to the frequency when the load resistance is fixed and the distance between resonant coils is changed;
Fig. 9 is a graph showing the relationship of the maximum output voltage and maximum power transmission efficiency relative to the distance between the resonant coils;
Fig. 10 is a graph showing the relationship of the difference between the frequencies at the maximum point and minimum point of the input impedance value; and
Fig. 11 is a diagram showing a non-contact power transmission device of the prior art.

## EMBODIMENT OF THE INVENTION

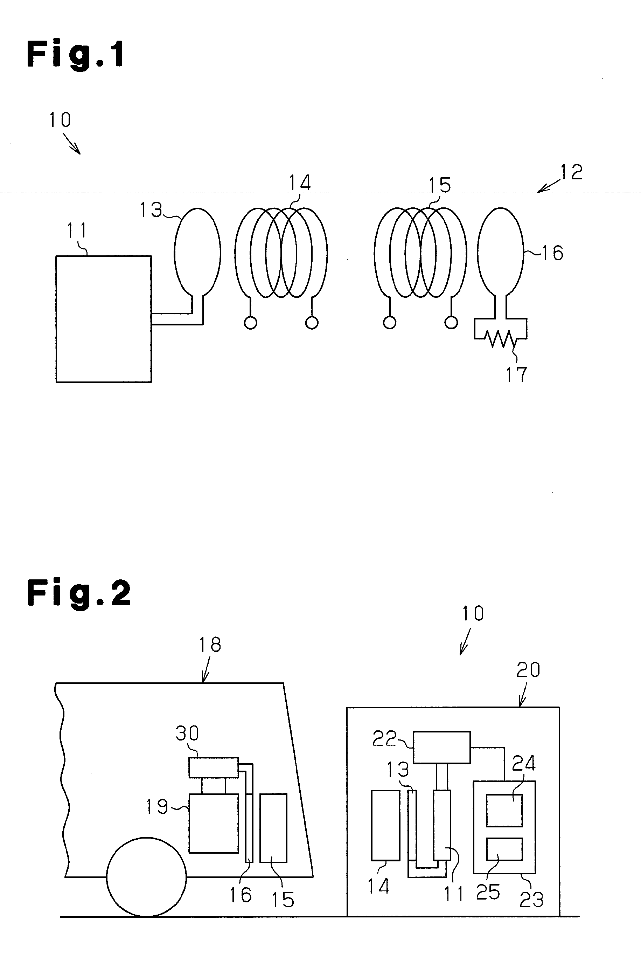

One embodiment of the present invention will now be described with reference to Figs. 1 to 10.
As shown in Fig. 1, a non-contact power transmission device 10 includes a resonant system 12, which transmits in a non-contact manner power supplied from an AC power supply 11. The resonant system 12 includes a primary coil 13, which is connected to the AC power supply 11, a primary resonant coil 14, a secondary resonant coil 15, and a secondary coil 16. The secondary coil 16 is connected to a load 17.
In this embodiment, the non-contact power transmission device 10 is applied to a system that performs non-contact charging on a rechargeable battery 19 installed in a movable body 18 (e.g., vehicle). As shown in Fig. 2, the secondary resonant coil 15 and the secondary coil 16 are arranged in the movable body 18. The secondary coil 16 is connected by a rectification circuit 30 to the rechargeable battery 19, which serves as the load 17. The AC power supply, the primary coil 13, and the primary resonant coil 14 are arranged in a charger 20, which charges the rechargeable battery 19 in a non-contact state.
The non-contact power transmission device 10 applies voltage from the AC power supply 11 to the primary coil 13 to generate a magnetic field at the primary coil 13. The magnetic field is strengthened by magnetic field resonance caused by the primary resonant coil 14 and the secondary resonant coil 15. The strengthened magnetic field is retrieved as power (energy) from near the secondary resonant coil 15 by the secondary coil 16 using electromagnetic induction and supplied to the load 17. The primary coil 13, the primary resonant coil 14, the secondary resonant coil 15, and the secondary coil 16 are formed by electric wires. The diameter and number of windings for each coil is set in accordance with the level of the transmitted power or the like. In this embodiment, the primary coil 13, the primary resonant coil 14, the secondary resonant coil 15, and the secondary coil 16 have the same diameter.

The AC power supply 11 is a power supply that outputs AC voltage. The frequency of the output AC voltage of the AC power supply 11 can be freely changed. Accordingly, the frequency of the AC voltage applied to the resonant system 12 can be freely changed.

The charger 20 includes an impedance measurement unit 22, which is capable of measuring the input impedance of the resonant system 12, and a controller 23, which serves as a control unit. The "input impedance of the resonant system 12" refers to the impedance of the entire resonant system 12 measured across the two ends of the primary coil 13. The controller 23 includes a CPU 24 and a memory 25. The memory 25 stores an analysis program to analyze the measurement result of the impedance measurement unit 22. The CPU 24 forms an analysis unit that analyzes the measurement result of the impedance measurement unit 22.

The analysis program includes a distance computation program and a load computation program. The distance computation program computes the distance between the primary resonant coil 14 and the secondary resonant coil 15 (inter-resonant coil distance) based on the measurement result of the impedance measurement unit 22. The load computation program computes the impedance of the load 17 (rechargeable battery 19) that is connected to the secondary coil 16. The memory 25 stores a distance computation map showing the relationship of the difference of the frequencies of the AC power supply 11 at the maximum point and minimum point of the input impedance value and the inter-resonant coil distance. When the maximum point and minimum point of the input impedance value each appear at two locations, the difference between the maximum point having the lower frequency and the minimum point having the higher frequency is stored. Further, the memory 25 stores a load impedance computation map showing the relationship between the input impedance of the resonant system 12, the frequency, and the impedance of the load.

The distance computation program obtains the difference between the frequency at the maximum point of the input impedance value and the frequency of the minimum point. Then, the distance computation program uses the distance computation map to obtain the inter-resonant coil distance corresponding to the value of the frequency difference. When driving the non-contact power transmission device 10, the controller 23 controls the AC power supply 11 to supply the primary coil 13 with an appropriate AC current corresponding to the distance from the movable body 18. Here, the appropriate frequency refers to the frequency corresponding to the distance between the primary resonant coil 14 and the secondary resonant coil (inter-resonant coil distance). Further, when the value of the input impedance of the resonant system 12 and the frequency is shown in a graph, the appropriate frequency would refer to a frequency between the frequency at the maximum point of the input impedance value and the frequency at the minimum point. Further, the frequency having the best power transmission efficiency in the resonant system is used as the resonant frequency.

The resonant computation program computes the impedance of the load 17 based on the measurement result of the impedance measurement unit 22 using the load impedance computation map. Further, during charging, the controller 23 executes charge control while determining the charge of sate of the rechargeable battery 19 from the impedance state of the rechargeable battery 19.

The map is generated based on the fact that the relationship of the input impedance, power transmission efficiency, and output voltage of the resonant system 12 relative to the frequency changes for when the inter-resonant coil distance, or the distance between the primary resonant coil 14 and the secondary resonant coil 15, is fixed and the resistance of the load connected to the secondary coil 16 (load resistance) is changed and for when the load resistance is fixed and the inter-resonant coil distance is changed.

The following describes results of experiments conducted when forming the primary coil 13, the primary resonant coil 14, the secondary resonant coil 15, and the secondary coil 16 based on the next specifications. As the electric wires for the coils 13, 14, 15, and 16, thin vinyl insulation low voltage wires for automobiles (AVS wires) having a size of 0.5 sq (square mm) were used.
primary coil 13 and secondary coil: number of windings / 2 windings, diameter / 150 mm, close winding
two resonant coils 14 and 15: number of windings / 45 windings, diameter / 150 mm, close winding, two ends of coil open

Measurement Conditions

input voltage: sine wave 2 MHz to 5 MHz of 20 Vpp (amplitude 10 V)
inter-resonant coil distance: 200 mm
load resistance: 10 Ω, 20 Ω, 30 Ω, 50 Ω, 100Ω

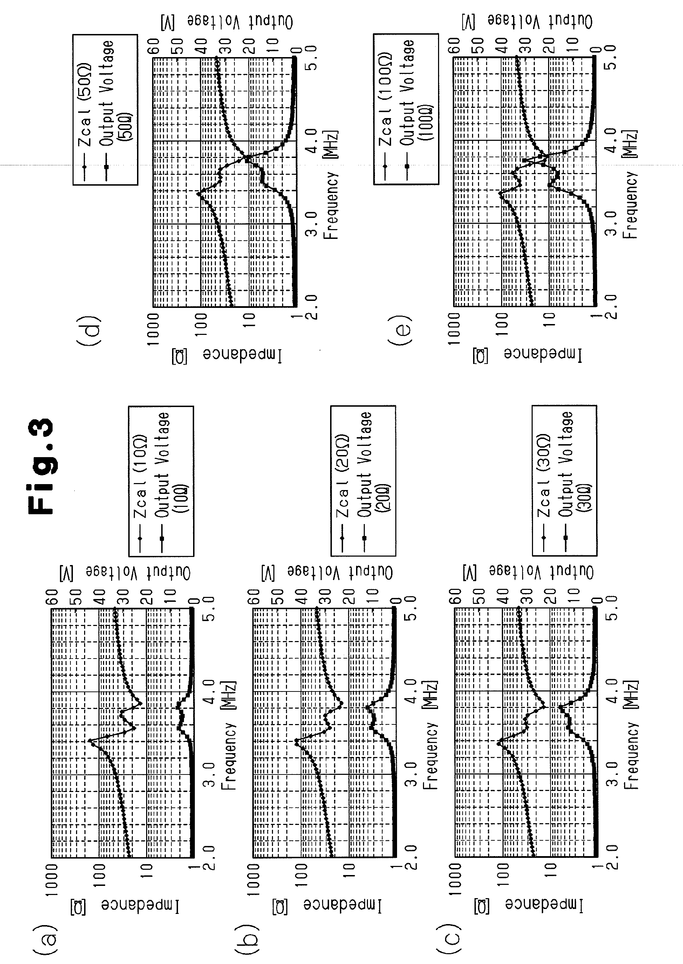

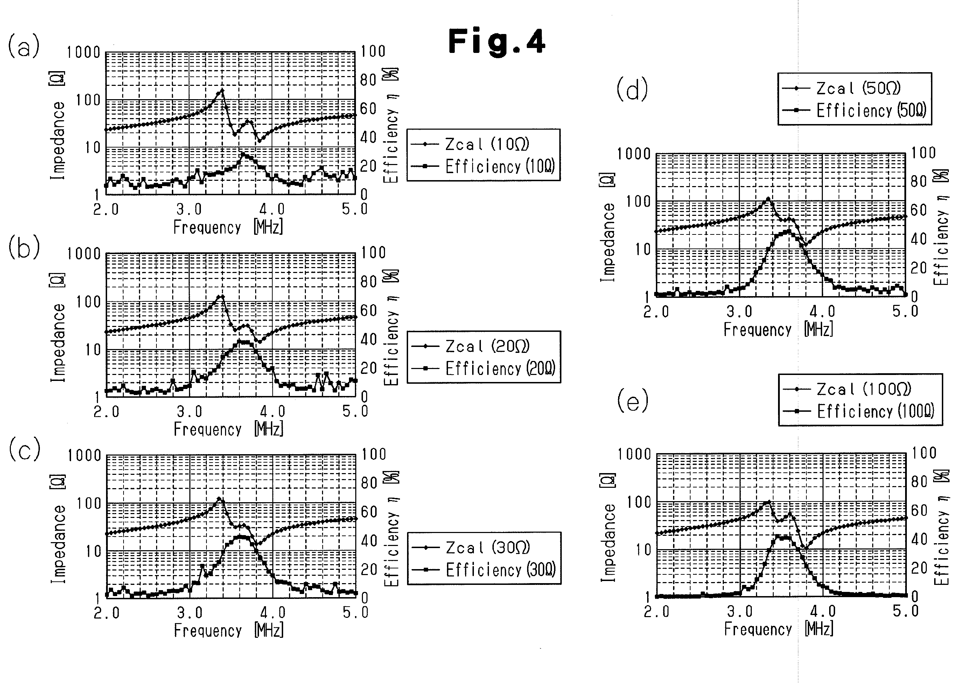

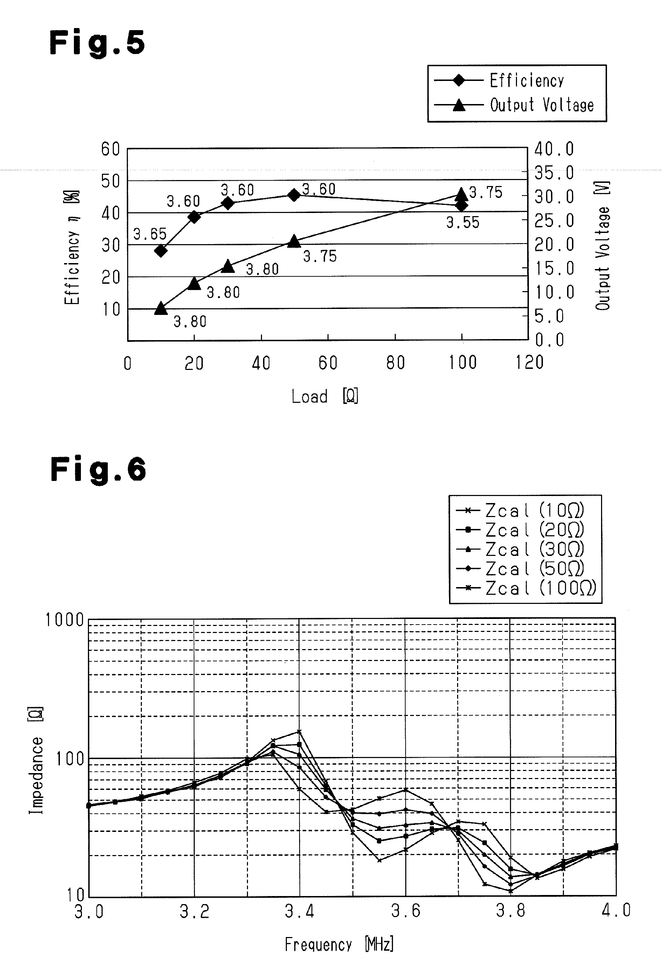

Fig. 3 shows the relationship of the input impedance and voltage output of the resonant system 12 relative to the frequency. Fig. 4 shows the relationship of the input impedance and voltage transmission efficiency of the resonant system 12 relative to the frequency. Fig. 5 shows the relationship of the maximum output voltage and maximum power transmission efficiency relative to the load resistance. Fig. 6 shows the relationship of the input impedance and the frequency. The numerals in Fig. 5 show the values of the frequencies (MHz) at which the output voltage and power transmission efficiency η are maximum. The power transmission efficiency η is obtained in the following manner.

power transmission efficiency η = (power consumption at load / input power to primary coil)
× 100 [100%]

The following observations can be made from Figs. 3 to 5.

The maximum output voltage monotonously increases as the load resistance increases.

The best efficiency was obtained when the load resistance is 50 Ω.

For forward resistance, changes are small for the resonant frequency that results from changes in the load resistance.

The change in the load resistance affects the input impedance near the resonance frequency.

As long as the inter-resonant coil distance is known, the load resistance can be obtained from the input impedance of the resonant system 12 at a preset frequency.

Further, in this embodiment, the memory 25 stores a plurality of graphs showing the relationship of the input impedance and the frequency in accordance with the various inter-resonant coil distances as shown in Fig. 6 as the load impedance computation map.

The results described below were obtained when conducting experiments in which the specifications of the coils forming the resonant system 12 were the same, the load resistance was fixed at 50 Ω, and the inter-resonant coil distance was changed as described below.

Measurement Conditions

input voltage: sine wave 2 MHz to 5 MHz of 20 Vpp (amplitude 10 V)
load resistance: 50 Ω
inter-resonant coil distance: 50 mm, 100 mm, 200 mm, 300 mm, 400 mm

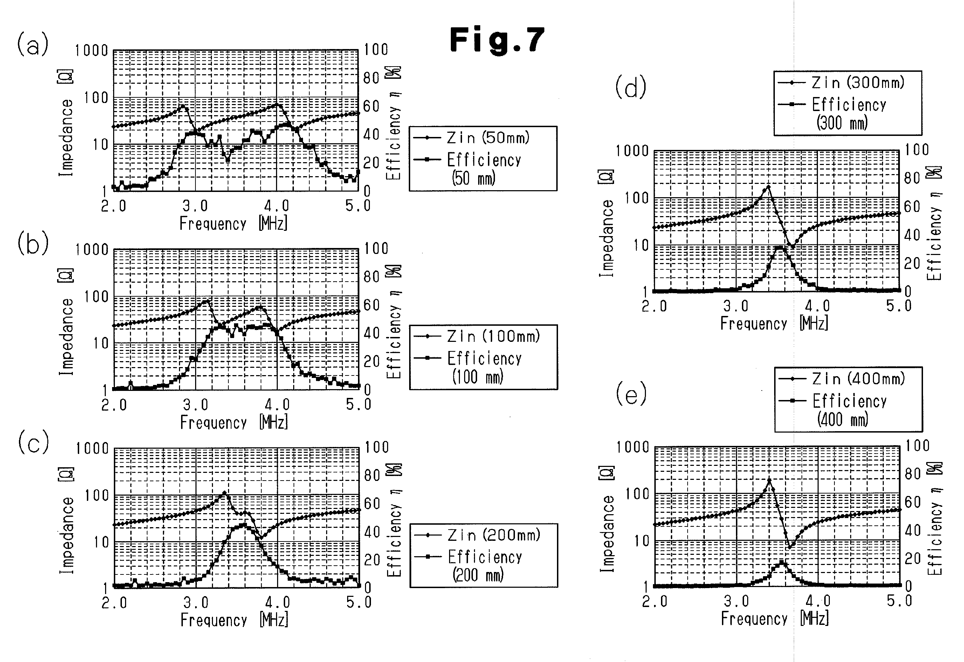

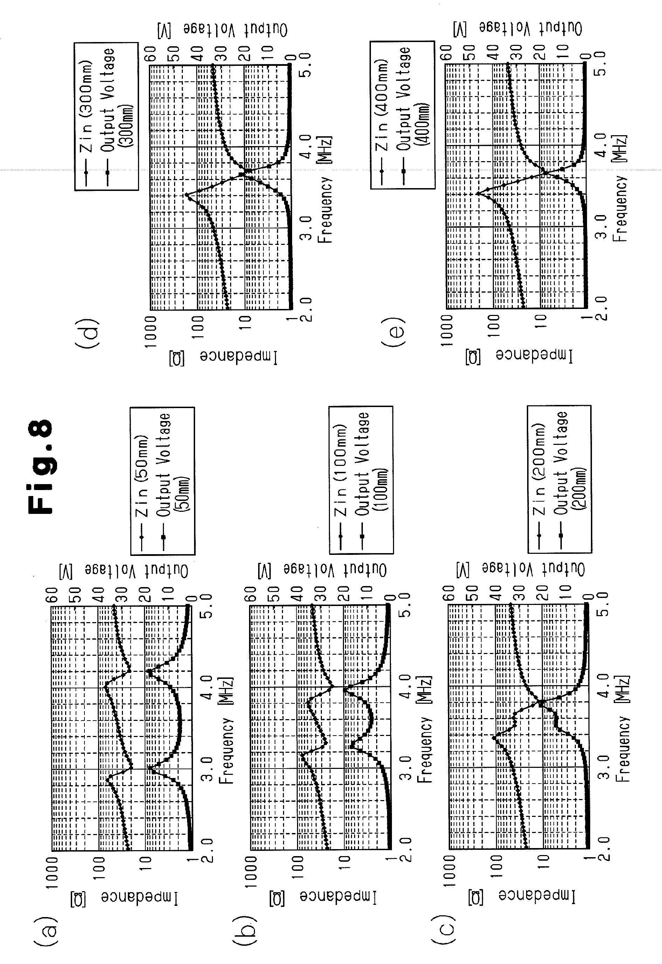

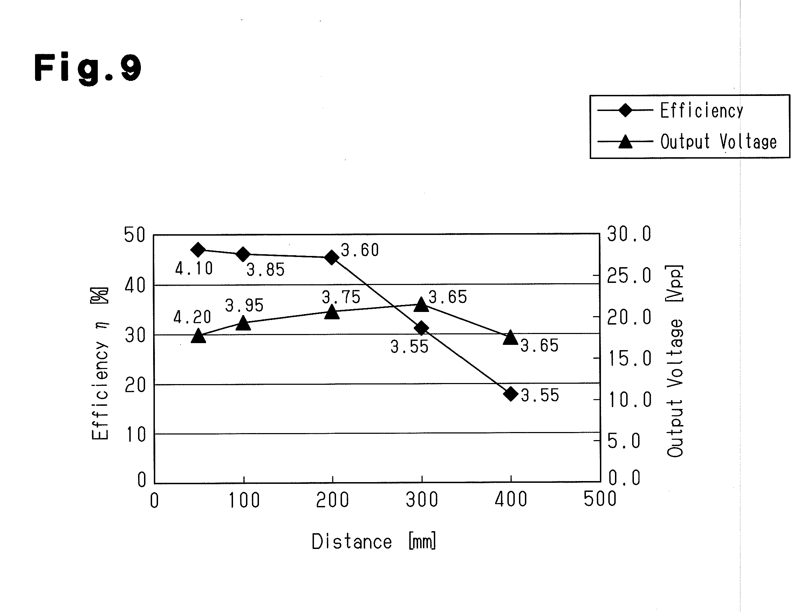

Fig. 7 shows the relationship of the input impedance and power transmission efficiency of the resonant system 12 relative to the frequency. Fig. 8 shows the relationship of the input impedance and voltage output of the resonant system 12 relative to the frequency. Fig. 9 shows the relationship of the maximum output voltage and maximum power transmission efficiency when changing the inter-resonant coil distance. The numerals in Fig. 9 show the values of the frequencies (MHz) at which the output voltage and power transmission efficiency η are maximum.

The following observations can be made from Figs. 7 to 9.

An increase in the inter-resonant coil distance by a certain level or more decreased the maximum power transmission efficiency.

The frequency when the output voltage became maximum differed from the frequency when the power transmission efficiency became maximum.

When the inter-resonant coil distance decreased, there were two resonant points. It is considered that this is because the resonant coils increase the influence of mutual inductance.

When there are two resonant points, an inter-resonant coil distance that is highly efficient in a wide frequency band (range) is present.

The inter-resonant coil distance can be obtained from the difference between the frequency at the maximum point and frequency at the minimum point in the input impedance value of the resonant system 12 (when the maximum point and minimum point of the input impedance value each appear at two locations, the difference between the maximum point having the lower frequency and the minimum point having the higher frequency).

Fig. 10 is a graph showing the relationship of the difference between the frequency at the maximum point and the frequency at the minimum point of the input impedance in the resonant system 12 relative to the inter-resonant coil distance. In this embodiment, the memory 25 stores graphs such as that shown in Fig. 10 for different types of load resistances.

The operation of the non-contact power transmission device 10 will now be described.

When the rechargeable battery 19 arranged in the movable body 18 requires charging, the movable body 18 stops at a position corresponding to the charger 20 to charge the rechargeable battery 19 with the charger 20. The movable body 18 includes a sensor that detects the load resistance of the rechargeable battery 19. Charging is performed when the load resistance of the rechargeable battery 19 reaches a preset value.

When a sensor (not shown) arranged in the charger 20 detects that the movable body 18 has stopped at the charging position, the impedance measurement unit 22 measures the input impedance of the resonant system 12 in a preset frequency range, for example, in the range of 2 MHz to 5 MHz. The CPU 24 analyzes the relationship of the input impedance and frequency of the resonant system 12 from the measurement results of the impedance measurement unit 22 and first computes the distance between the primary resonant coil 14 and the secondary resonant coil 15 (inter-resonant coil distance). More specifically, the difference between the frequency at the maximum point and the frequency at the minimum point of the input impedance value is computed when showing the relationship of the input impedance value of the resonant system 12 and the frequency with a graph. The distance computation is used to obtain the inter-resonant coil distance corresponding to the frequency.

Next, the controller 23 supplies the primary coil 13 with AC voltage at an appropriate frequency corresponding to the inter-resonant coil distance, that is, the distance between the charger 20 and the movable body 18. More specifically, in accordance with a command from the controller 23, the AC power supply 11 applies AC voltage having a resonant frequency of the resonant system 12 to the primary coil 13 and generates a magnetic field at the primary coil 13. The magnetic field is strengthened by the magnetic field resonance caused by the primary resonant coil 14 and the secondary resonant coil 15. The secondary coil 16 retrieves, as power, the strengthened magnetic field from near the secondary resonant coil 15. The power is supplied through the rectification circuit 30 to the rechargeable battery 19. This charges the rechargeable battery 19.

After the charging starts, the CPU 24 computes the input impedance of the resonant system 12 from the measurement signal of the impedance measurement unit 22 and uses the load impedance computation may to compute the impedance (load resistance) of the load 17, namely, the rechargeable battery 19. The load resistance of the rechargeable battery 19 changes in accordance with the state of charge. The load resistance when in a full state of charge differs from that when the full state of charge has not been reached. The memory 25 stores the value of the load resistance when the rechargeable battery 19 is in a full state of charge. The controller 23 stops charging after a predetermined time elapses from when the value of the load resistance of the rechargeable battery 19 reaches the value of the full state of charge.

This embodiment has the advantage described below.

(1) The non-contact power transmission device 10 includes the AC power supply 11, the resonant system 12, which includes the primary coil 13 connected to the AC power supply 11, the primary coil 13, the secondary resonant coil 15, and the secondary coil 16, and the load 17, which is connected to the secondary coil 16. Further, the non-contact power transmission device 10 includes the impedance measurement unit 22, which is capable of measuring the input impedance of the resonant system 12, and the analysis unit (CPU 24), which analyzes the measurement result of the impedance measurement unit 22. Accordingly, power transmission can be performed under appropriate conditions based on the analysis result of the input impedance of the resonant system 12.

(2) The CPU 24 computes the distance between the primary resonant coil 14 and the secondary resonant coil 15 (inter-resonant coil distance) based on at least the measurement result of the impedance measurement unit 22 and is capable of computing the impedance of the load 17. Accordingly, the inter-resonant coil distance can be obtained without using a dedicated distance sensor. In addition, the impedance of the load 17 connected to the secondary coil 16 can be specified.

(3) The distance between the primary resonant coil 14 and the secondary resonant coil 15 is computed using a map based on the difference (frequency difference) between the frequency value of the maximum value at the low frequency side of the input impedance and the frequency value of the minimum value at the high frequency side of the input impedance. Accordingly, the inter-resonant coil distance is obtained without using a dedicated distance sensor.

(4) The non-contact power transmission device 10 is applied to a system that performs non-contact charging on the rechargeable battery 19, which is arranged in the movable body 18. The secondary resonant coil 15 and the secondary coil 16 are arranged in the movable body 18. The secondary coil 16 is connected to the rechargeable battery 19, which serves as the load. The AC power supply 11, the primary coil 13, and the primary resonant coil 14 are arranged in the charger 20, which charges the rechargeable battery 19 in a non-contact state. The controller 23, which includes the analysis unit (CPU 24), supplies the charger 20 with current having the appropriate frequency corresponding to the distance from the movable body 18. Accordingly, during charging, since the primary coil 13 is supplied with having the appropriate frequency corresponding to the distance from the movable body 18, charging is efficiently performed.

(5) The secondary resonant coil 15 and the secondary coil 16 are arranged in the movable body 18. The secondary coil 16 is connected to the rechargeable battery 19, which serves as the load. The primary coil 13 and the primary resonant coil 14 are arranged in the charger 20, which charges the rechargeable battery 19 in a non-contact state. Due to the controller 23, which includes the CPU 24, the charger 20 executes charge control while determining the state of charge of the rechargeable battery. This avoids insufficient charging and excessive charging when charging is performed.

(6) The CPU 24 computes the impedance of the rechargeable battery 19, which is connected to the secondary coil 16, based on the measurement result of the impedance measurement unit 22. Accordingly, there is no need for a dedicated sensor used to determine the state of charge of the rechargeable battery 19. Further, the impedance measurement unit 22, which is at the power transmitting side, measures the impedance at the load, which is at the power receiving side.

The embodiment described above is not limited to the foregoing description and may be embodied as described below.

The number of windings and winding diameter of the primary coil 13, the primary resonant coil 14, the secondary resonant coil 15, and the secondary coil 16 are not limited to the values of the embodiment described above.

The movable body 18 is not limited to the vehicle, and may be a self-propelled type robot that includes a rechargeable battery or a portable electronic device.

The movable body 18 is not limited to a subject including a rechargeable battery and may be a device that is moved by a transferring unit such as a conveyor to determined working positions and includes a motor driven by electric power. In this case, the motor forms the load 17, and the movable body 18 includes the secondary resonant coil 15 and the secondary coil 16. Further, the AC power supply 11, the primary coil 13, the primary resonant coil 14, and the controller 23 are arranged at each working position. Further, in a state in which the movable body 18 is moved to a working position, the AC power supply 11 supplies the device with power.

The non-contact power transmission device 10 may have a structure in which the primary resonant coil 14 and the secondary resonant coil 15 are used in a state in which they are both fixed at predetermined positions. For example, in a case in which the primary resonant coil 14 is arranged in a ceiling and the secondary resonant coil 15 is arranged in the floor, when accurately positioning a device so that the primary resonant coil 14 and the secondary resonant coil 15 are in accordance with the inter-resonant coil distance corresponding to the resonant frequency set beforehand, it would be difficult to arrange the primary resonant coil 14 and the secondary resonant coil 15 so as to obtain the target distance. However, based on the measurement result of the impedance measurement unit 22, which measures the input impedance of the resonant system 12, the distance between the primary resonant coil 14 and the secondary resonant coil 15 can be computed. Thus, by performing power transmission from the power transmitting side at the resonant frequency according to the laid out position, the device can efficiently perform non-contact power transmission even when the device is not accurately positioned.

The non-contact power transmission device 10 only needs to include the impedance measurement unit 22, which measures the input impedance of the resonant system 12, and the analysis unit, which analyzes the measurement result of the impedance measurement unit 22. For example, the analysis unit (CPU 24) may be capable of computing the distance between the primary resonant coil 14 and the secondary resonant coil 15 based on the measurement result of the impedance measurement unit 22 but not capable of computing the impedance of the load 17 connected to the secondary coil 16. Further, when charging the rechargeable battery 19, instead of determining the state of charge of the rechargeable battery 19 at the power transmitting side (controller 23), charging may be completed after a predetermined time elapses from when charging starts. Alternatively, a detection unit, which detects the state of charge of the rechargeable battery 19, may be arranged at the power receiving side, and charging may be completed by a full state of charge signal from the power receiving side.

The analysis unit (CPU 24) is capable of computing the impedance of the load connected to the secondary coil 16 based on the measurement result of the impedance measurement unit 22 but not capable of computing the distance between the primary resonant coil 14 and the secondary resonant coil 15. For example, when charging the rechargeable battery 19 of the movable body 18, a dedicated sensor may be used to detect the distance between the movable body 18 and the charger 20 corresponding to the distance between the primary resonant coil 14 and the charger 20, and the controller 23 may determine the resonant frequency based on the inter-resonant coil distance measured by the sensor to execute charge control.

Instead of the map showing the relationship between the difference of the frequency at the maximum point and frequency at the minimum point of the input impedance relative to the inter-resonant coil distance, a map showing the relationship of the difference between the frequency at the maximum point and frequency at the minimum point of the voltage of the primary coil 13 may be used as the distance computation map.

Instead of the distance computation map, the memory 25 may store an equation expressing the relationship of the difference of the frequency at the maximum point and frequency at the minimum point of the input impedance relative to the inter-resonant coil distance or an equation expressing the relationship of the difference of the frequency at the maximum point and frequency at the minimum point of the voltage of the primary coil 13 relative to the inter-resonant coil distance. The inter-resonant coil distance may be computed based on the equations.

Instead of the load impedance computation map, the memory 25 may store an equation expressing the relationship of the input impedance of the resonant system 12, the frequency, and the load impedance. The load impedance may be computed based on the equation.

When winding an electric wire to form a coil, the coil does not necessarily have to be cylindrical. For example, the coil may have the shape of a simple tube like an oval tube or a polygonal tube, such as a triangular tube, a tetragonal tube, or a hexagonal tube. Further, the coil is not required to be a tube having a cross-section with a symmetric shape and may have a cross-section with an irregular shape.

The primary resonant coil 14 and the secondary resonant coil 15 are not limited to electric wires wound into tubular forms and may have, for example, a shape in which an electric wire is wound along the same plane and the length of the winding sequentially changes.

The coils may have a structure in which an electric wire is closely wound so that adjacent windings of the electric wire contact each other or so that windings are spaced apart so that windings do not contact each other.

The primary coil 13, the primary resonant coil 14, the secondary resonant coil 15, and the secondary coil 16 do not all have to be formed with the same diameter. For example, the primary resonant coil 14 may have the same diameter as the secondary resonant coil 15, and the primary coil 13 and secondary coil 16 may have different diameters.

**Claims**

1. A non-contact power transmission device comprising:

   an AC power supply;
   a resonant system including a primary coil, which is connected to the AC power supply, a primary resonant coil, a secondary resonant coil, and a secondary coil;
   a load connected to the secondary coil;
   an impedance measurement unit capable of measuring an input impedance of the resonant system; and
   an analysis unit that analyzes a measurement result of the impedance measurement unit.

2. The device according to claim 1, wherein the analysis unit computes a distance between the primary resonant coil and the secondary resonant coil based on at least the measurement result of the impedance measurement unit and is capable of computing an impedance of the load.

3. The device according to claim 1, wherein the analysis unit computes an impedance of the load based on at least the measurement result of the impedance measurement unit and is capable of computing a distance between the primary resonant coil and the secondary resonant coil.

4. The device according to claim 2 or 3, wherein the secondary resonant coil and the secondary coil are arranged in a movable body, the secondary coil is connected to a rechargeable battery serving as the load, the AC power supply, the primary coil, and the primary resonant coil are arranged in a charger that performs charging in a non-contact state on the rechargeable battery, and the charger supplies current to the primary coil at an appropriate frequency corresponding to the distance from the movable body with a control unit including the analysis unit.

5. The device according to any one of claims 2 to 4, wherein the secondary resonant coil and the secondary coil are arranged in a movable body, the secondary coil is connected to a rechargeable battery serving as the load, the AC power supply, the primary coil, and the primary resonant coil are arranged in a charger that performs charging in a non-contact state on the rechargeable battery, and the charger determines a state of the charge of the rechargeable battery and executes charge control with a control unit including the analysis unit.

6. The device according to any one of claims 2 to 4, wherein the analysis unit computes the distance between the primary resonant coil and the secondary resonant coil based on a difference of a value of a frequency at a maximum value of a low frequency side of the input impedance and a value of a frequency at a minimum value of a high frequency side of the input impedance.

7. The device according to any one of claims 2 to 5, wherein the analysis unit computes the impedance of the load based on a value of the input impedance at a preset frequency.

# Fig.1

# Fig.2

# Fig.3

Fig.4

# Fig.5

# Fig.6

# Fig.7

(a)

(b)

(c)

(d)

(e)

EP 2 395 628 A1

# Fig.8

(a)

(b)

(c)

(d)

(e)

EP 2 395 628 A1

# Fig.9

# Fig.10

# Fig.11

| | | |
|---|---|---|
| **INTERNATIONAL SEARCH REPORT** | International application No. | |
| | PCT/JP2010/051823 | |

**A. CLASSIFICATION OF SUBJECT MATTER**
*H02J17/00*(2006.01)i, *B60L5/00*(2006.01)i, *B60M7/00*(2006.01)i, *H01M10/44*
(2006.01)i, *H02J7/00*(2006.01)i

According to International Patent Classification (IPC) or to both national classification and IPC

**B. FIELDS SEARCHED**

Minimum documentation searched (classification system followed by classification symbols)
H02J17/00, B60L5/00, B60M7/00, H01M10/44, H02J7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2009/014125 A1 (Universal Device Technology Co., Ltd.),<br>29 January 2009 (29.01.2009),<br>paragraphs [0024], [0031] to [0035], [0059] to [0060]; fig. 1 to 3, 5<br>(Family: none) | 1<br>2-5,7<br>6 |
| Y | JP 2004-248365 A (Yazaki Corp.),<br>02 September 2004 (02.09.2004),<br>paragraphs [0018] to [0044]; fig. 1, 4 to 7<br>(Family: none) | 2-5,7 |
| Y | JP 7-031064 A (TDK Corp.),<br>31 January 1995 (31.01.1995),<br>paragraphs [0033] to [0043]; fig. 1<br>(Family: none) | 5 |

| ☒ Further documents are listed in the continuation of Box C. | ☐ See patent family annex. |
|---|---|

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 04 March, 2010 (04.03.10) | 16 March, 2010 (16.03.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**EP 2 395 628 A1**

<table>
<tr><td colspan="2">**INTERNATIONAL SEARCH REPORT**</td><td>International application No.<br>PCT/JP2010/051823</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | Andre Kurs et al, "Wireless Power Transfer via Strongly Coupled Magnetic Resonances" [online], Science, 2007.07.06, vol.317, p.83-86 | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007008646 A2

**Non-patent literature cited in the description**

- *NIKKEI ELECTRONICS,* 03 December 2007, 117-128